# EUROPÄISCHE PATENTSCHRIFT

(11) **EP 3 261 822 B1**
(45) Veröffentlichungstag und Bekanntmachung des Hinweises auf die Patenterteilung: **10.04.2019**
(21) Anmeldenummer: 16705035.0
(22) Anmeldetag: 15.02.2016
(51) Int. Cl.: B29C 70/46, B29C 70/50

(54) **PROZESSANORDNUNG SOWIE VERFAHREN ZUR HERSTELLUNG EINES FASERVERSTÄRKTEN KUNSTSTOFFBAUTEILS**
PROCESSING ARRANGEMENT AND A METHOD FOR PRODUCING A FIBRE-REINFORCED PLASTIC COMPONENT
SYSTÈME DE TRAITEMENT ET PROCÉDÉ DE FABRICATION D'UN ÉLÉMENT EN MATIÈRE PLASTIQUE RENFORCÉE DE FIBRES

(30) Priorität: 23.02.2015 DE 102015002107
(43) Veröffentlichungstag der Anmeldung: 03.01.2018
(73) Patentinhaber: Volkswagen Aktiengesellschaft, 38436 Wolfsburg (DE); BASF SE, 67056 Ludwigshafen am Rhein (DE)
(72) Erfinder: MERTENS, Thomas, 38468 Ehra-Lessien (DE); EHLEBEN, Max, 38126 Braunschweig (DE); KUNZE, Christine, 38527 Meine (DE); TÄGER, Olaf, 38126 Braunschweig (DE); BITTERLICH, Maurice, 38165 Lehre (DE); ZEUNER, Katja, 38104 Braunschweig (DE); DESBOIS, Philippe, 68535 Edingen (DE); WOLLNY, Andreas, 67251 Freinsheim (DE)
(74) Vertreter: Bierschneider, Walter
(86) Internationale Anmeldenummer: PCT/EP2016/000252
(87) Internationale Veröffentlichungsnummer: WO 2016/134829

(56) Entgegenhaltungen:
- EP-A1- 0 443 051
- WO-A1-2011/056293
- WO-A1-2012/116947

## Beschreibung

Die Erfindung betrifft eine Prozessanordnung zur Herstellung eines faserverstärkten Kunststoffbauteils nach dem Oberbegriff des Patentanspruches 1 sowie ein Verfahren zur Herstellung eines solchen Kunststoffbauteils nach dem Oberbegriff des Patentanspruches 9.

Die Herstellung von faserverstärkten Kunststoffbauteilen kann mit Hilfe von textilen Halbzeugen, sogenannten Prepregs, erfolgen. Bei reaktiven Prepregs ist ein textiles Fasermaterial mit einem reaktiven, das heißt noch nicht polymerisierten thermoplastischen Matrixmaterial unterhalb einer Polymerisations-Starttemperatur vorimprägniert. Zur Formgebung des faserverstärkten Kunststoffbauteils werden die Prepregs in einem Ablegevorgang zu einem Lagenpaket übereinandergestapelt und einem Tiefzieh- oder Pressverfahren unterworfen.

Aus der WO 2012/116947 A1 ist ein gattungsgemäßes Verfahren zur Herstellung von reaktiven Prepregs, das heißt von endlosfaserverstärkten, flächigen Halbzeugen mit Polyamidmatrix bekannt. In dem Verfahren werden zunächst textile Strukturen mit einer flüssigen Ausgangskomponente der Polyamidmatrix, das heißt geschmolzenes Lactam einschließlich zugegebener Katalysatoren und/oder Aktivatoren, vorimprägniert, und zwar in einem kontinuierlichen Prozess. Nach erfolgter Imprägnierung wird die vorimprägnierte textile Endlos-Struktur in einer Schneidstation zu faserverstärkten flächigen Halbzeugen konfektioniert und in einer Stapelstation übereinander gestapelt. Im weiteren Prozessverlauf werden die vorimprägnierten textilen Halbzeuge zu einer Assemblierstation transportiert, in der die textilen Halbzeuge in einem Ablegevorgang übereinandergelegt und entsprechend der Endkontur des herzustellenden Bauteils zugeschnitten werden. Das so gebildete Lagenpaket wird anschließend in eine Werkzeugform eingelegt. Dann erfolgt die Formgebung, und zwar bei einer Temperatur oberhalb der Polymerisations-Starttemperatur in einem Press- oder Tiefziehvorgang. Auf diese Weise polymerisiert das vorimprägnierte Lactam zu einem Polyamid. Durch das gleichzeitige Tiefziehen/Pressen wird das faserverstärkte, flächige Halbzeug in die beabsichtigte Form des herzustellenden Bauteils gebracht.

Anschließend kann in einer Nachbehandlungsstation ein Endbeschnitt des fertiggestellten Kunststoffbauteils erfolgen, und zwar unter Bildung von Endbeschnitt-Resten, die aus einem Verbund aus Fasern und dem polymerisierten Matrixmaterial bestehen. Die Endbeschnitt-Reste können einer Recyclingstation zugeführt werden und dort zu einem Recyclat für Anwendungen in einem Spritzguss- oder Pressprozess weiterverarbeitet werden, wie es zum Beispiel in der EP 2 666 805 B1 angedeutet ist. Demzufolge können Bauteile auf Basis einer thermoplastischen Matrix durch ein einfaches Zerkleinern und Extrudieren neuen Anwendungen zum Beispiel im Spritzgussbereich zugeführt werden. Dabei besteht der grundlegende Vorteil von Faserverbundwerkstoffen auf Basis einer thermoplastischen Matrix in der hervorragenden Recyclierungseigenschaft. Durch ein einfaches Aufschmelzen und Regranulieren vermischen sich die Fasern und die Matrix homogen. Das so recyclierte Granulat kann erneut als ein hochwertiger Rohstoff für die verschiedensten Anwendungen eingesetzt werden.

Bei der oben skizzierten Prozesskette besteht die Problematik darin, dass - abgesehen von dem erwähnten Endbeschnitt-Rest - zusätzlich auch zu vorgelagerten Prozesszeitpunkten Randbeschnitt-Reste (aus der Konfektionierung der Faserhalbzeuge) und Assemblierbeschnitt-Reste entstehen. Die Randbeschnitt-Reste und die Assemblierbeschnitt-Reste sind - im Unterschied zum Endbeschnitt-Rest - noch nicht polymerisiert und können daher im oben angegebenen Recyclingprozess nicht weiterverarbeitet werden. Die Randbeschnitt- und Assemblierbeschnitt-Reste werden daher als nicht recyclingfähiger Materialausschuss aus der Prozesskette herausgeführt.

Aus der EP 0 443 051 A1 ist ein Recycling von Beschnitt-Resten bekannt, wobei die Beschnitt-Reste Teile bereits ausgehärteter Prepregs sind. Gemäß der WO 2011/056293 A1 werden faserverstärkte Späne zur Herstellung von Verbundbauteilen verwendet. Die Späne werden dabei beispielsweise von einem faserverstärkten vorimprägnierten Werkstoff abgeschnitten.

Die Aufgabe der Erfindung besteht darin, eine Prozessanordnung sowie ein Verfahren zur Herstellung eines faserverstärkten Kunststoffbauteils bereitzustellen, das ein im Vergleich zum Stand der Technik verbessertes Recyclingkonzept aufweist.

Die Aufgabe der Erfindung ist durch die Merkmale des Patentanspruches 1 oder des Patentanspruches 9 gelöst. Bevorzugte Weiterbildungen der Erfindung sind in den abhängigen Ansprüchen offenbart.

Gemäß dem kennzeichnenden Teil des Patentanspruches 1 weist die Prozessanordnung eine Recyclingstation auf, in die die Beschnitt-Reste aus dem Verbund aus Fasern und reaktivem thermoplastischem Matrixmaterial zuführbar sind. Die Recyclingstation stellt auf der Grundlage der Beschnitt-Reste ein Recyclat bereit, das als ein reaktives, noch nicht polymerisiertes Ausgangsmaterial für die Herstellung eines Bauteils oder die Funktionalisierung eines Bauteils, zum Beispiel durch Rippenstrukturen, dient.

In einer bevorzugten Ausführungsvariante kann der Prozessanordnung eine Formgebungsstation zugeordnet sein, in der infolge einer Wärmeeinbringung unter Polymerisation des Recyclats die Herstellung des Bauteils erfolgt. Im Hinblick auf eine einwandfreie Polymerisation in der Formgebungsstation ist es von Relevanz, dass das noch nicht polymerisierte Recyclat nicht in Kontakt mit der Umgebung gelang, das heißt mit der Luftfeuchtigkeit, dem Sauerstoff, der UV-Strahlung oder dergleichen reagiert, wodurch dessen Verarbeitbarkeit, insbesondere die Polymerisation, beeinträchtigt wird. Um eine solche nachteilige Reaktion mit der Umgebung zu vermeiden, kann das Recyclat bis zu seiner Polymerisation getrocknet werden und/oder in luft-, licht- und/oder feuchtigkeitsdichter Abschirmung gelagert werden.

Die Formgebungsstation kann in einer technischen Umsetzung einen Extruder oder eine Dosiereinrichtung aufweist, in der das Recyclat bis oberhalb seiner Schmelztemperatur, jedoch unterhalb seiner Reaktionstemperatur aufschmelzbar ist. Das aufgeschmolzene Recyclat wird mittels des Extruders oder der Dosiereinrichtung in die Werkzeugkavität eines Formgebungswerkzeugs eingebracht, das bis auf eine Temperatur oberhalb der Reaktionstemperatur aufgeheizt ist. Die Einbringung in das bis auf die Reaktionstemperatur aufgeheizte Werkzeug kann zum Beispiel über die Düse eines Spritzgußaggregates oder über den Injektionskopf einer Dosieranlage in ein offenes oder geschlossenes Formgebungswerkzeug erfolgen.

Neben der Einbringung in das geschlossene oder geöffnete Werkzeug (zum Beispiel LFT-Pressprozess mit reaktiver Matrix) sind auch andere Verfahren, zum Beispiel das Spritzprägen des Recyclats, denkbar.

Alternativ dazu kann das Recyclat, ohne vorheriges Aufschmelzen, im festen Aggregatszustand in die Werkzeugkavität des Formgebungswerkzeugs der Formgebungsstation eingebracht werden. In diesem Fall kann das Recyclat zum Beispiel erst bei geschlossener Werkzeugkavität des Formgebungswerkzeug aufgeschmolzen, in der Werkzeugkavität verteilt und darin polymerisiert werden. Eine Kombination mit anderen formgebenden Verfahren, zum Beispiel Pressverfahren reaktiver, endlosfaserverstärkter Guss-PA-Prepregs, ist denkbar. Als Beispiel sei das Hinterspritzen oder-pressen kurzfaserverstärkter Guss-PA-Rippen aus reaktivem Rezyclat erwähnt.

Die zur Recyclingstation geführten Beschnitt-Reste sind gegebenenfalls so groß, dass sie vor der Weiterverarbeitung als Recyclat zum Beispiel in einer Schneidmühle verkleinert werden. Vorzugsweise liegen nach dem Verkleinerungsvorgang Beschnitt-Reste mit einstellbarer, einheitlicher Faserlänge (Kurz- bis Langfasern) vor. Wie bereits oben angedeutet, müssen zur Vermeidung der Kontamination des reaktiven Matrixmaterials mit Luftfeuchte sowohl die Zwischenlagerung der Beschnitt-Reste vor und nach der Verkleinerung als auch der Schneidmühlenprozess selbst in trockener Atmosphäre erfolgen.

Die der Recyclingstation zugeführten Beschnitt-Reste können - im Vergleich zum Faservolumentanteil des herzustellenden Bauteils - einen erhöhten Faservolumenanteil aufweisen. Vor diesem Hintergrund können in Abhängigkeit vom erforderlichen Faservolumengehalt des Recyclats den in die Recyclingstation geführten Beschnitt-Resten ein reaktives Matrixmaterial und/oder gegebenenfalls Zusatzstoffe, wie Verdickungsmittel, zusetzbar sein.

In einer fertigungstechnischen Umsetzung kann in der Fertigungsstation in einem kontinuierlichen Prozess zumindest eine Endlosbahn aus einer textilen Struktur mit einer flüssigen Ausgangskomponente des reaktiven, thermoplastischen Matrixmaterials vorimprägniert werden. Nach erfolgter Imprägnierung wird ein Randbeschnitt durchgeführt, bei dem die vorimprägnierte Endlos-Struktur in einer Schneidstation zu den endlosfaserverstärkten textilen Faserhalbzeugen (Prepregs) mit reaktivem, das heißt noch nicht polymerisiertem, thermoplastischen Matrixmaterial konfektioniert wird. Die Konfektionierung erfolgt unter Bildung von Randbeschnitt-Resten, die aus einem Verbund aus Fasern und reaktivem thermoplastischen Matrixmaterial bestehen. In den Randbeschnitt-Resten sind die Fasern fertigungstechnisch bedingt nicht vollständig mit dem Matrixmaterial benetzt. Die Randbeschnitt-Reste können zum Teil sogar komplett ohne Matrixmaterial vorliegen. Entsprechend ist der Faseranteil in den Randbeschnitt-Resten sehr hoch.

Im weiteren Prozessverlauf werden die Prepregs in einer Stapelstation übereinandergestapelt und gelagert sowie bei Bedarf zu einer Assemblierstation transportiert. In der Assemblierstation werden die Prepregs in einem Ablegevorgang zu einem Lagenpaket übereinandergeschichtet. Anschließend kann ein Assemblierbeschnitt erfolgen, bei dem das Lagenpaket entsprechend einer Endkontur des faserverstärkten Kunststoffbauteils zugeschnitten wird. Dabei ergeben sich Assemblierbeschnitt-Reste, bestehend aus einem Verbund aus Fasern und reaktivem thermoplastischem Matrixmaterial. Im Unterschied zu dem Randbeschnitt-Resten sind die Assemblierbeschnitt-Reste vollständig von Matrixmaterial umgeben, das heißt vollimprägniert, so dass der Faseranteil dem eines fertiggestellten faserverstärkten Kunststoffbauteils entspricht.

Als reaktives thermoplastisches Matrixmaterial wird vorzugsweise Caprolactam (sogenanntes Guss-PA) verwendet. Alternative reaktive thermoplastische Matrixsysteme können außer Caprolactam auch zum Beispiel Laurinlactam und zyklisches Buthylentherephtalat, etc. sein. Als Fasermaterial sind alle möglichen Fasern denkbar. Vorzugsweise werden Fasern aus Glas, Kohlenstoff (sogenannte Carbonfasern), Basalt, Aramit oder eine Kombination davon verwendet. Diese liegen in unterschiedlichster Anordnung, wie zum Beispiel Gewebe, Gelege oder undirektional, vor. Die Polymerisation erfolgt bei Carprolactam mittels einer Reaktionstemperatur von ca. 150°C, bei der aus dem Caprolactam das Polyamid (PA6) entsteht. Für andere reaktive Materialien, wie zum Beispiel Laurinlactam zu PA12 oder CBT zu PBT sind dem jeweiligen Material angepasste Temperaturen zu wählen.

Die vorstehend erläuterten und/oder in den Unteransprüchen wiedergegebenen vorteilhaften Aus- und/oder Weiterbildungen der Erfindung können - außer zum Beispiel eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend von Zeichnungen näher erläutert.

Es zeigen:
- Fig. 1 bis 4: jeweils Prozessstationen zur Herstellung des faserverstärkten Kunststoffbauteils; und
- Fig. 5: ein Blockschaltdiagramm der Prozesskette einschließlich einer Recyclingstation.

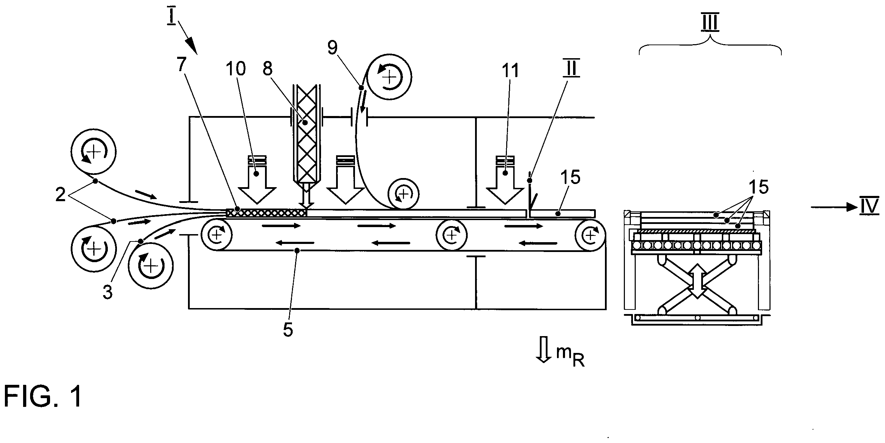

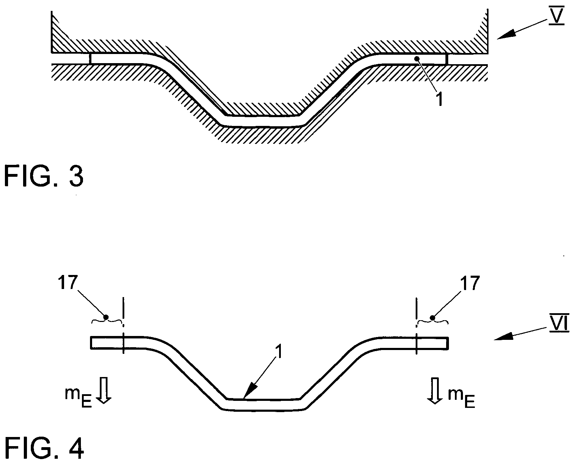

In den Fig. 1 bis 4 sind die Prozessstationen I bis VI zur Herstellung eines faserverstärkten Kunststoffbauteils 1 (Fig. 3 und 4) insoweit dargestellt, als es für das Verständnis der Erfindung erforderlich ist. Demzufolge werden in einer Fertigungsstation I zunächst exemplarisch zwei Faserlagen 2 in einem kontinuierlichen Prozess unter Zwischenlage einer ersten Folie 3 aus zum Beispiel Polyamid oder einem anderen geeigneten Material auf ein Endlostransportband 5 gebracht. Die so gebildete textile Lagenstruktur 7 wird mit einer Ausgangskomponente 8 eines reaktiven thermoplastischen Matrixmaterials, etwa Lactam, durchtränkt, und zwar unter Wärmebeaufschlagung 10 bei einer Temperatur unterhalb der Starttemperatur für eine Polymerisation der Ausgangskomponente des reaktiven thermoplastischen Matrixmaterials. Die in der Fig. 1 gezeigten Folien 2 und 9 sind rein exemplarisch dargestellt und zur Realisierung der Erfindung nicht erforderlich.

Anschließend wird im weiteren Prozessverlauf noch eine zweite Folie 9 appliziert und die textile Lagenstruktur 7 in einer Kühleinheit 11 abgekühlt (das heißt konsolidiert) sowie in einer nachfolgenden Schneidstation II zu einzelnen vorimprägnierten, textilen Faserhalbzeugen 15 konfektioniert. In der Schneidstation II erfolgt ein Randbeschnitt, bei dem die vorimprägnierte Endlos-Struktur 7 zu den endlosfaserverstärkten textilen Faserhalbzeugen 15 (nachfolgend auch als Prepregs bezeichnet) zugeschnitten wird. Dabei entsteht ein Randbeschnitt-Rest m_{R}, der aus einem Verbund aus Fasern und reaktivem (das heißt noch nicht polymerisiertem) thermoplastischem Matrixmaterial besteht. Der Randbeschnitt-Rest m_{R} wird als Materialausschuss aus der Prozesskette abgeführt. Im Randbeschnitt-Rest m_{R} sind die Fasern nicht vollständig mit dem reaktivem Matrixmaterial benetzt oder liegen diese gänzlich ohne Matrixmaterial vor, wodurch der Randbeschnitt-Rest m_{R} einen sehr hohen Faseranteil aufweist.

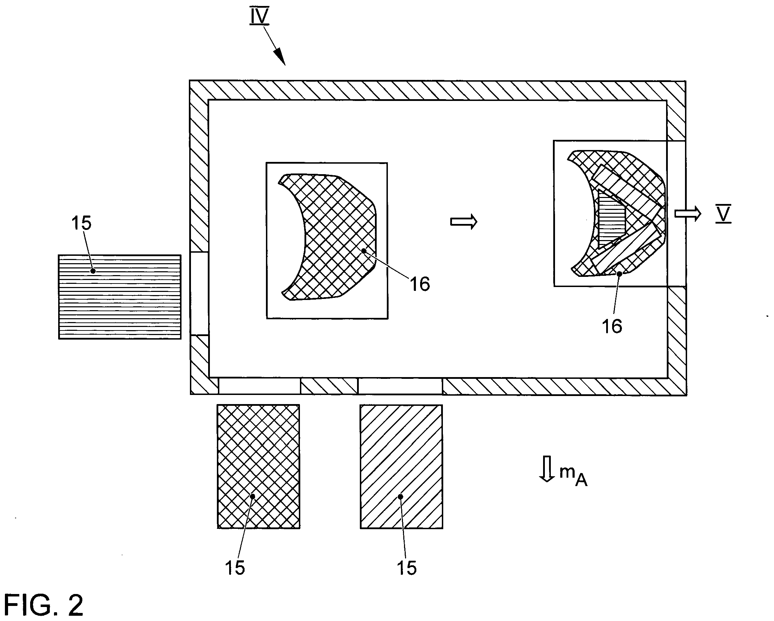

Die konfektionierten textilen Faserhalbzeuge 15 werden in einer folgenden Stapelstation III übereinander gestapelt und gelagert. Je nach Bedarf werden die übereinander gestapelten Faserhalbzeuge 15 zu einer prozesstechnisch nachgeschalteten Assemblierstation IV übertragen, die in der Fig. 2 angedeutet ist. In der Assemblierstation IV werden die vorimprägnierten, textilen Faserhalbzeuge 15 zugeschnitten und zu einem Lagenpaket 16 (Fig. 2) übereinandergeschichtet abgelegt. Zudem werden die zum Lagenpaket 16 übereinandergeschichteten Prepregs 15 entsprechend den Lasterfordernissen und Geometrieanforderungen des fertiggestellten Kunststoffbauteils 1 zugeschnitten. Daraus ergibt sich ein weiterer Materialausschuss, der als ein Assemblierbeschnitt-Rest m_{A} aus der Prozesskette geführt wird. Der Assemblierbeschnitt-Rest m_{A} besteht aus einem Verbund aus Fasern und reaktivem thermoplastischem Matrixmaterial. Im Unterschied zum Randbeschnitt-Rest m_{R} sind im Assemblierbeschnitt-Rest m_{A} die Fasern vollständig von Matrixmaterial umgeben, das heißt vollimprägniert. Der Faseranteil des Assemblierbeschnitt-Rests m_{A} ist daher niedriger als beim Randbeschnitt-Rest m_{R} und im Wesentlichen identisch mit dem Faseranteil des fertiggestellten Kunststoffbauteils 1.

Im weiteren Prozessverlauf wird das Lagenpaket 16 zu der, in der Fig. 3 grob schematischen angedeuteten Press- und/oder Tiefziehstation V übertragen, in der das Lagenpaket 16 auf eine Temperatur oberhalb der Polymerisationstemperatur erwärmt wird und gleichzeitig in die Form des herzustellenden Kunststoffbauteils 1 tiefgezogen/gepresst wird. In einer prozesstechnisch nachgelagerten Nachbehandlungsstation VI (Fig. 4) wird am Kunststoffbauteil 1 ein Endbeschnitt durchgeführt, bei dem beispielhaft ein für den Tiefziehvorgang erforderlicher äußerer Bauteilrand 17 vom Kunststoffbauteil 1 entfernt wird, und zwar unter Bildung eines Endbeschnitt-Rests m_{E}, der aus einem Verbund aus Fasern und polymerisiertem Matrixmaterial besteht.

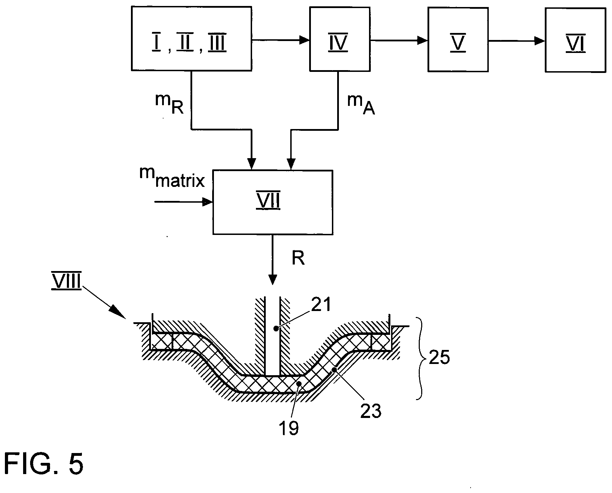

In der der Fig. 5 ist der Prozesskette I bis VI zur Herstellung des Kunststoffbauteils 1 eine Recyclingstation VII zugeordnet, in die die noch nicht polymerisierten Randbeschnitt- und Assemblierbeschnitt-Reste m_{R}, m_{A} geführt werden. In der Recyclingstation VII kann gegebenenfalls eine Schneidmühle angeordnet sein, die die Beschnitt-Reste m_{R}, m_{A} bis auf vorgegebene Faserlängen zerkleinert. In der Recyclingstation VII werden die Beschnitt-Reste m_{R}, m_{A} zu einem Recyclat R zusammengefasst, das aus dem Verbund aus Fasern und reaktivem thermoplastischem Matrixmaterial besteht und ein reaktives, noch nicht polymerisiertes Ausgangsmaterial für die Herstellung eines weiteren Bauteils 19 bildet.

Wie aus der Fig. 5 hervorgeht, ist der Recyclingstation VII eine Formgebungsstation VIII nachgeschaltet, in der unter Polymerisation des Recyclats R infolge Wärmeeinbringung das Bauteil 19 hergestellt wird. In der technischen Ausführung kann die Formgebungsstation VIII eine nur angedeutete Dosiereinrichtung 21 aufweisen, in der das Recyclat R bis oberhalb seiner Schmelztemperatur, jedoch noch unterhalb seiner Reaktionstemperatur aufgeschmolzen wird. Das aufgeschmolzene Recyclat R wird mittels der Dosiereinrichtung 21 in die Werkzeugkavität 23 eines Formgebungswerkzeug 25 eingebracht, das bis auf eine Temperatur oberhalb der Reaktionstemperatur aufgeheizt ist. Das heißt dass nach erfolgter Einbringung das aufgeschmolzene Recyclat R in der Werkzeugkavität 23 polymerisiert.

Die Recyclingstation VII weist in der Fig. 5 zudem einen Zulauf 27 auf, um den Beschnitt-Resten m_{A}, m_{R} in der Recyclingstation VII ein reaktives Matrixmaterial mₘₐₜᵣᵢₓ und/oder gegebenenfalls Zusatzstoffe, wie Verdickungsmittel, zuzuführen. Auf diese Weise kann der erforderliche Faservolumengehalt des herzustellenden Bauteils 19 angepasst werden.

## Patentansprüche

1. Prozessanordnung zur Herstellung eines faserverstärkten Kunststoffbauteils (1), mit einer Fertigungs- und Assemblierstation (I, IV) zur Bereitstellung zumindest eines endlosfaserverstärkten textilen Faserhalbzeugs (15) mit reaktivem thermoplastischen Matrixmaterial, und zwar unter Bildung von Beschnitt-Resten (m_{R}, m_{A}) aus einem Verbund aus Fasern und dem reaktiven thermoplastischen Matrixmaterial, und mit einer Press- und/oder Tiefziehstation (V), in der das endlosfaserverstärkte textile Faserhalbzeug (15) mit reaktivem thermoplastischem Matrixmaterial auf eine Temperatur oberhalb der Polymerisationstemperatur erwärmt wird und gleichzeitig in die Form des herzustellenden Kunststoffbauteils (1) pressbar und/oder tiefziehbar ist, **dadurch gekennzeichnet, dass** die Prozessanordnung eine Recyclingstation (VII) aufweist, in die die Beschnitt-Reste (m_{R}, m_{A}) aus dem Verbund aus Fasern und reaktivem thermoplastischem Matrixmaterial zuführbar sind zur Bereitstellung eines Recyclats (R) als reaktives, noch nicht polymerisiertes Ausgangsmaterial für die Herstellung eines weiteren Bauteils (19) oder für die Funktionalisierung des Bauteils (1).

2. Prozessanordnung nach Anspruch 1, **dadurch gekennzeichnet, dass** die Prozessanordnung eine Formgebungsstation (VIII) aufweist, in der unter Polymerisation des Recyclats (R) infolge Wärmeeinbringung die Herstellung des Bauteils (19) erfolgt.

3. Prozessanordnung nach Anspruch 2, **dadurch gekennzeichnet, dass** die Formgebungsstation (VIII) einen Extruder oder eine Dosiereinrichtung (21) aufweist, in der das Recyclat (R) bis oberhalb seiner Schmelztemperatur, jedoch unterhalb seiner Reaktionstemperatur aufschmelzbar ist, und dass das aufgeschmolzene Recyclat (R) mittels des Extruders oder der Dosiereinrichtung (21) in ein Formgebungswerkzeug (25) einbringbar ist, das bis auf eine Temperatur oberhalb der Reaktionstemperatur aufgeheizt ist.

4. Prozessanordnung nach Anspruch 2, **dadurch gekennzeichnet, dass** das Recyclat (R), ohne vorheriges Aufheizen bis oberhalb seiner Schmelztemperatur, im festen Aggregatszustand in eine Werkzeugkavität (23) des Formgebungswerkzeugs (25) der Formgebungsstation (VIII) einbringbar ist, und dass das Recyclat (R) erst bei geschlossener Werkzeugkavität (23) des Formgebungswerkzeug (25) aufgeschmolzen, in der Werkzeugkavität (23) verteilt und darin polymerisiert wird.

5. Prozessanordnung nach einem der vorhergehenden Ansprüche, **dadurch gekennzeichnet, dass** die Recyclingstation (VII) eine Zerkleinerungseinheit, etwa eine Schneidmühle, aufweist, in der die zugeführten Beschnitt-Reste (m_{R}, m_{A}) bis auf vorgegebene Faserlängen zerkleinerbar sind.

6. Prozessanordnung nach Anspruch 3, **dadurch gekennzeichnet, dass** den in die Recyclingstation (VII) geführten Beschnitt-Resten (m_{A}, m_{R}) ein reaktives Matrixmaterial (mₘₐₜᵣᵢₓ) und/oder gegebenenfalls Zusatzstoffe, wie Verdickungsmittel, zusetzbar sind.

7. Prozessanordnung nach Anspruch 1, **dadurch gekennzeichnet, dass** in der Fertigungsstation (I) in einem kontinuierlichen Prozess zumindest eine Endlosbahn aus einer textilen Struktur (7) mit einer flüssigen Ausgangskomponente (8) des reaktiven thermoplastischen Matrixmaterials vorimprägnierbar ist, und dass eine Schneidstation (II) bereitgestellt ist, in der nach erfolgter Imprägnierung ein Randbeschnitt erfolgt, bei dem die gebildete vorimprägnierte Endlos-Struktur (7) zu den endlosfaserverstärkten textilen Faserhalbzeugen (15) mit reaktivem thermoplastischem Matrixmaterial konfektionierbar ist, und zwar unter Bildung eines Randbeschnitt-Rests (m_{R}), der aus dem Verbund aus Fasern und reaktivem thermoplastischem Matrixmaterial besteht.

8. Prozessanordnung nach Anspruch 1, **dadurch gekennzeichnet, dass** in der Assemblierstation (IV) die endlosfaserverstärkten textilen Faserhalbzeuge (15) in einem Ablegevorgang zu einem Lagenpaket (16) übereinanderschichtbar sind, oder dass ein Assemblierbeschnitt erfolgt, bei dem das Faserhalbzeug (15) entsprechend einer Endkontur des faserverstärkten Kunststoffbauteils (1) zuschneidbar ist, und zwar unter Bildung eines Assemblierbeschnitt-Rests (m_{A}), der aus dem Verbund aus Fasern und reaktivem thermoplastischem Matrixmaterial besteht.

9. Verfahren zur Herstellung eines faserverstärkten Kunststoffbauteils (1) aus zumindest einem endlosfaserverstärkten textilen Faserhalbzeug (15) mit reaktivem thermoplastischem Matrixmaterial, wobei bei der Fertigung des Faserhalbzeugs (15) Beschnitt-Reste (m_{R}, m_{A}) anfallen, die aus einem Verbund aus Fasern und dem reaktiven thermoplastischen Matrixmaterial bestehen, **dadurch gekennzeichnet, dass** die bei der Fertigung des Faserhalbzeugs (15) anfallenden Beschnitt-Reste (m_{R}, m_{A}) einer Recyclingstation (VII) zugeführt werden zur Bereitstellung eines Recyclats (R) als reaktives, noch nicht polymerisiertes Ausgangsmaterial für die Herstellung eines weiteren Bauteils (19) oder für die Funktionalisierung des Bauteils (1).

## Claims

1. Process arrangement for the production of a fiber-reinforced plastics component (1), with a manufacture and assembly unit (I, IV) for the provision of at least one continuous-fiber-reinforced semifinished textile fiber product (15) with reactive thermoplastic matrix material, and specifically with formation of trimming residues (m_{R}, m_{A}) made of a composite of fibers and of the reactive thermoplastic matrix material, and with a press unit and/or thermoforming unit (V) in which the continuous-fiber-reinforced semifinished textile fiber product (15) with reactive thermoplastic matrix material is heated to a temperature above the polymerization temperature and at the same time can be pressed and/or thermoformed into the shape of the required plastics component (1), **characterized in that** the process arrangement comprises a recycling unit (VII) into which the trimming residues (m_{R}, m_{A}) made of the composite of fibers and of reactive thermoplastic matrix material can be supplied for the provision of a recyclate (R) as reactive, as yet unpolymerized starting material for the production of a further component (19) or for the functionalization of the component (1).

2. Process arrangement according to Claim 1, **characterized in that** the process arrangement comprises a shaping unit (VIII) in which the component (19) is produced with polymerization of the recyclate (R) as a result of introduction of heat.

3. Process arrangement according to Claim 2, **characterized in that** the shaping unit (VIII) comprises an extruder or a metering facility (21) in which the recyclate (R) can be melted to above its melting temperature but below its reaction temperature, and the melted recyclate (R) can be introduced by means of the extruder or the metering facility (21) into a shaping mold (25) which is heated to a temperature above the reaction temperature.

4. Process arrangement according to Claim 2, **characterized in that** the recyclate (R), without prior heating to above its melting temperature, can be introduced in the solid aggregate state into a mold cavity (23) of the shaping mold (25) of the shaping unit (VIII), and the recyclate (R) is melted, distributed in the mold cavity (23), and polymerized therein only when the mold cavity (23) of the shaping mold (25) is closed.

5. Process arrangement according to any of the preceding claims, **characterized in that** the recycling unit (VII) comprises a comminuting assembly, such as a cutting mill, in which the supplied trimming residues (m_{R}, m_{A}) can be comminuted to specified fiber lengths.

6. Process arrangement according to Claim 3, **characterized in that** a reactive matrix material (mₘₐₜᵣᵢₓ) and/or optionally additives, such as thickeners, can be added to the trimming residues (m_{A}, m_{R}) passed into the recycling unit (VII).

7. Process arrangement according to Claim 1, **characterized in that** at least one continuous web made of a texture structure (7) can be preimpregnated with a liquid starting component (8) of the reactive thermoplastic matrix material in the manufacturing unit (I) in a continuous process, and there is a cutting unit (II) provided in which, after impregnation, edge-trimming takes place in which the resultant preimpregnated continuous structure (7) can be cut to size to give the continuous-fiber-reinforced semifinished textile fiber products (15) with reactive thermoplastic matrix material, and specifically with formation of an edge-trimming residue (m_{R}), composed of the composite of fibers and of reactive thermoplastic matrix material.

8. Process arrangement according to Claim 1, **characterized in that** in the assembly unit (IV) the continuous-fiber-reinforced semifinished textile fiber products (15) can be mutually superposed in layers to give a layer package (16) in a lay-up procedure, or assembly trimming takes place in which the semifinished fiber product (15) can be trimmed to size in accordance with a final shape of the fiber-reinforced plastics component (1), and specifically with formation of an assembly-trimming residue (m_{A}) composed of the composite made of fibers and of reactive thermoplastic matrix material.

9. Process for the production of a fiber-reinforced plastics component (1) made of at least one continuous-fiber-reinforced semifinished textile fiber product (15) with reactive thermoplastic matrix material, where during the manufacture of the semifinished fiber product (15) trimming residues (m_{R}, m_{A}) arise, composed of a composite made of fibers and of the reactive thermoplastic matrix material, **characterized in that** the trimming residues (m_{R}, m_{A}) obtained during the manufacture of the semifinished fiber product (15) are supplied to a recycling unit (VII) for the provision of a recyclate (R) as reactive, as yet unpolymerized starting material for the production of a further component (19) or for the functionalization of the component (1).

## Revendications

1. Agencement de procédé pour la fabrication d'un composant en matière plastique renforcé par des fibres (1), comprenant une station de production et d'assemblage (I, IV) pour la préparation d'au moins un produit semi-fini fibreux textile renforcé par des fibres filaments (15) avec un matériau de matrice thermoplastique réactif, et ce avec formation de résidus de découpe (m_{R}, m_{A}) constitués par un composite de fibres et du matériau de matrice thermoplastique réactif, et comprenant une station de compression et/ou d'emboutissage (V), dans laquelle le produit semi-fini fibreux textile renforcé par des fibres filaments (15) avec le matériau de matrice thermoplastique réactif est porté à une température supérieure à la température de polymérisation et peut simultanément être comprimé et/ou embouti sous la forme du composant en matière plastique à fabriquer (1), **caractérisé en ce que** l'agencement de procédé comprend une station de recyclage (VII), dans laquelle les résidus de découpe (m_{R}, m_{A}) constitués par le composite de fibres et du matériau de matrice thermoplastique réactif peuvent être introduits pour la préparation d'un produit recyclé (R) en tant que matériau de départ réactif, encore non polymérisé, pour la fabrication d'un autre composant (19) ou pour la fonctionnalisation du composant (1).

2. Agencement de procédé selon la revendication 1, **caractérisé en ce que** l'agencement de procédé comprend une station de façonnage (VIII), dans laquelle la fabrication du composant (19) a lieu avec polymérisation du produit recyclé (R) à la suite de l'introduction de chaleur.

3. Agencement de procédé selon la revendication 2, **caractérisé en ce que** la station de façonnage (VIII) comprend une extrudeuse ou un dispositif de dosage (21), dans laquelle le produit recyclé (R) peut être fondu jusqu'au-dessus de sa température de fusion, mais toutefois en dessous de sa température de réaction, et **en ce que** le produit recyclé fondu (R) peut être introduit au moyen de l'extrudeuse ou du dispositif de dosage (21) dans un outil de façonnage (25), qui est porté à une température supérieure à la température de réaction.

4. Agencement de procédé selon la revendication 2, **caractérisé en ce que** le produit recyclé (R) peut être introduit sans chauffage préalable jusqu'au-dessus de sa température de fusion, à l'état d'agrégation solide, dans une cavité d'outil (23) de l'outil de façonnage (25) de la station de façonnage (VIII), et **en ce que** le produit recyclé (R) n'est fondu que lorsque la cavité d'outil (23) de l'outil de façonnage (25) est fermée, réparti dans la cavité d'outil (23) et polymérisé dans celle-ci.

5. Agencement de procédé selon l'une quelconque des revendications précédentes, **caractérisé en ce que** la station de recyclage (VII) comprend une unité de broyage, par exemple un broyeur à couteaux, dans laquelle les résidus de découpe introduits (m_{R}, m_{A}) peuvent être broyés jusqu'à des longueurs de fibres prédéterminées.

6. Agencement de procédé selon la revendication 3, **caractérisé en ce qu'**un matériau de matrice réactif (m_{matrice}) et/ou éventuellement des additifs, tels que des épaississants, peuvent être ajoutés aux résidus de découpe (m_{A}, m_{R}) introduits dans la station de recyclage (VII).

7. Agencement de procédé selon la revendication 1, **caractérisé en ce que**, dans un procédé continu, au moins une bande continue en une structure textile (7) peut être pré-imprégnée avec un composant initial liquide (8) du matériau de matrice thermoplastique réactif dans la station de production (I), et **en ce qu'**une station de découpe (II) est mise à disposition, dans laquelle une découpe des bords a lieu après l'imprégnation, lors de laquelle la structure continue pré-imprégnée formée (7) peut être mise sous la forme des produits semi-finis fibreux textiles renforcés par des fibres filaments (15) avec le matériau de matrice thermoplastique réactif, et ce avec formation d'un résidu de découpe des bords (m_{R}), qui est constitué par le composite de fibres et du matériau de matrice thermoplastique réactif.

8. Agencement de procédé selon la revendication 1, **caractérisé en ce que**, dans la station d'assemblage (IV), les produits semi-finis fibreux textiles renforcés par des fibres filaments (15) peuvent être stratifiés les uns sur les autres par un processus de pose pour former un paquet de couches (16), ou **en ce qu'**une découpe d'assemblage a lieu, lors de laquelle le produit semi-fini fibreux (15) peut être découpé selon un contour final du composant en matière plastique renforcé par des fibres (1), et ce avec formation d'un résidu de découpe d'assemblage (m_{A}), qui est constitué par le composite de fibres et du matériau de matrice thermoplastique réactif.

9. Procédé de fabrication d'un composant en matière plastique renforcé par des fibres (1) constitué par au moins un produit semi-fini fibreux textile renforcé par des fibres filaments (15) avec un matériau de matrice thermoplastique réactif, selon lequel des résidus de découpe (m_{R}, m_{A}) sont formés lors de la production du produit semi-fini fibreux (15), qui sont constitués par un composite de fibres et du matériau de matrice thermoplastique réactif, **caractérisé en ce que** les résidus de découpe (m_{R}, m_{A}) formés lors de la production du produit semi-fini fibreux (15) sont introduits dans une station de recyclage (VII) pour la préparation d'un produit recyclé (R) en tant que matériau de départ réactif, encore non polymérisé, pour la fabrication d'un autre composant (19) ou pour la fonctionnalisation du composant (1).
